# EUROPEAN PATENT APPLICATION

(11) **EP 4 498 485 A1**
(43) Date of publication of application: **29.01.2025**
(21) Application number: 22958494.1
(22) Date of filing: 16.09.2022
(51) Int. Cl.: H01M 50/116, H01M 50/218, H01M 50/514

(54) **BATTERY AND ELECTRICAL DEVICE**

(71) Applicant: Contemporary Amperex Technology Co., Limited, Ningde, Fujian 352100 (CN)
(72) Inventor: CHENG, Qi, Ningde, Fujian 352100 (CN); LI, Quankun, Ningde, Fujian 352100 (CN); WANG, Hong, Ningde, Fujian 352100 (CN); LIU, Jiang, Ningde, Fujian 352100 (CN); TANG, Daichun, Ningde, Fujian 352100 (CN)
(74) Representative: Herrmann, Uwe
(86) International application number: PCT/CN2022/119401
(87) International publication number: WO 2024/055304

(57) **Abstract**

A battery (100) and a power consuming device are provided. The battery (100) includes a battery module (110) and a case (120), where the battery module (110) includes multiple battery cells electrically connected, a shell of each of the multiple battery cells is made of an insulating material, and the case (120) is provided with a cavity (123) configured to accommodate the battery module (110) and the case (120) is made of an insulating material.

## Description

### TECHNICAL FIELD

The present application relates to the technical field of batteries, in particular to a battery and a power consuming device.

### BACKGROUND

In the development of battery technologies, the energy density of batteries is a design factor that cannot be ignored. Therefore, how to increase the energy density of batteries is an urgent technical problem to be solved in battery technologies.

### SUMMARY

An embodiment of the present application provides a battery and a power consuming device. The energy density of the battery can be increased.

In a first aspect, a battery is provided, including: a battery module, including multiple battery cells electrically connected, where a shell of each of the multiple battery cells is made of an insulating material; and a case, provided with a cavity configured to accommodate the battery module and the case is made of an insulating material.

In this embodiment, both the shell of the battery cell and the case of the battery are set to be made of the insulating material, which can reduce insulating components between the battery cell and the case, and reduce the weight of the battery, thereby increasing the energy density of the battery.

In a possible implementation, the case is provided with a first opening; the battery further includes a first end cover assembly arranged at a first end portion of the battery module in a first direction, the first end cover assembly covering the first opening, the first direction being a length direction of the battery; and an electrode terminal is arranged on the first end cover assembly and electrically connected to an output portion of the battery module.

In this embodiment, the first end cover assembly is arranged at the first end portion of the battery module in the first direction, to encapsulate the battery module in the cavity of the case, thereby reducing the risk of damage to the battery cells when the battery is subjected to vibration and shock.

In a possible implementation, the first end cover assembly includes a first insulating end cover provided with a first open hole configured to accommodate the electrode terminal; and the electrode terminal is electrically connected to the output portion of the battery module through the first open hole.

In this embodiment, the end cover in the first end cover assembly is set to be made of an insulating material, which contributes to eliminating an insulating structure between the electrode terminal and the end cover and an insulating structure between the end cover and the battery module, thereby further increasing the energy density of the battery.

In a possible implementation, the first end cover assembly further includes a sealing ring configured to seal a gap between the electrode terminal and the first open hole.

In this embodiment, the arrangement of the sealing ring improves the sealing property of the battery, thereby improving the safety of the battery.

In a possible implementation, the battery further includes a connector electrically connecting the output portion of the battery module to the electrode terminal.

In this embodiment, the arrangement of the connector can implement electrical connection between the output portion of the battery module and the electrode terminal.

In a possible implementation, the connector includes a first portion and a second portion, the first portion being arranged opposite to the first insulating end cover, the second portion extending towards the battery module from one end of the first portion in a second direction; the electrode terminal is connected to the first portion; the second portion is connected to the output portion of the battery module; and the second direction is a thickness direction of the battery.

In a possible implementation, the first portion is provided with a second open hole in which the electrode terminal is connected to the first portion.

In a possible implementation, the case is provided with a second opening; and the battery further includes a second end cover assembly arranged at a second end portion of the battery module in the first direction and covering the second opening, the second end cover assembly being made of an insulating material.

In this embodiment, the second end cover assembly is set to be made of the insulating material, which contributes to eliminating an insulating structure between an end cover and the battery module, thereby further increasing the energy density of the battery.

In a possible implementation, the second end cover assembly includes a second insulating end cover and two protrusions, the second insulating end cover being arranged opposite to the first insulating end cover, the two protrusions being oppositely arranged along the second direction and connected to the second insulating end cover; where projections of the two protrusions on a plane where the second insulating end cover is located are located in the second insulating end cover, such that the two protrusions are capable of being embedded into the second opening; and the second direction is a thickness direction of the battery.

In a possible implementation, the second insulating end cover and the two protrusions are integrally formed.

In this embodiment, the second insulating end cover and the two protrusions are integrally formed, which can reduce manufacturing procedures of the battery.

In a possible implementation, the second insulating end cover and the two protrusions are made of a same material.

In a possible implementation, the battery further includes a support assembly configured to support electrode output portions of the multiple battery cells.

In this embodiment, the support assembly is arranged to support the electrode output portions of the battery cells, which can reduce the risk of tearing at a joint between the battery cells.

In a possible implementation, in the second direction and a third direction, sizes of the support assembly are greater than sizes of the battery module, the second direction being a thickness direction of the battery, the third direction being a width direction of the battery.

In this embodiment, in the second direction and the third direction, the sizes of the support assembly are set to be greater than the sizes of the battery module, respectively, such that when the battery is subjected to vibration and shock, the support assembly is first in contact with the case to play a buffering role, thereby reducing the damage to the battery cells.

In a possible implementation, in the first direction, the support assembly divides the cavity into multiple sub-cavities, each of the multiple sub-cavities being configured to accommodate a column of battery cells stacked along the second direction in the multiple battery cells, the first direction being a length direction of the battery, the second direction being a thickness direction of the battery.

In a possible implementation, the support assembly is made of an insulating material.

In this embodiment, the support assembly is set to be made of the insulating material, which can avoid a short circuit between the battery cells and the case due to contact between the support assembly and the case.

In a possible implementation, the support assembly is fixedly connected to the case.

In a possible implementation, the support assembly is integrally formed with the case.

In this embodiment, the support assembly is integrally formed with the case, which can reduce the manufacturing procedures of the battery.

In a possible implementation, the case is provided with an adhesive injection hole at a corresponding position of the support assembly, the adhesive injection hole being configured to introduce a structural adhesive between the case and the support assembly, such that the case is fixedly connected to the support assembly.

In this embodiment, the case is provided with the adhesive injection hole at the corresponding position of the support assembly, such that the support assembly can be first assembled together with the battery module and then assembled into the case together with the battery module, thereby improving the stability of connection between the battery module and the support assembly.

In a possible implementation, the case is provided with a third opening in the third direction, the third opening being configured to guide the multiple battery cells to be assembled into the cavity; and the battery further includes a cover body covering the third opening and made of an insulating material.

In this embodiment, the case is provided with the third opening in the third direction, such that the battery module can be assembled into the cavity of the case along the third opening; and the cover body covers the third opening, such that the battery module can be encapsulated in the cavity, thereby protecting the battery module.

In a possible implementation, the support assembly includes a first support arranged between a first battery cell and a second battery cell electrically connected along the first direction in the multiple battery cells, the first support being provided with a first accommodating space configured to accommodate a first electrode output portion of the first battery cell and a second electrode output portion of the second battery cell, the first electrode output portion and the second electrode output portion being electrically connected, the first direction being a length direction of the battery.

In this embodiment, the first support is arranged between the first battery cell and the second battery cell that are electrically connected, and connecting portions of the first battery cell and the second battery cell are arranged in the first accommodating space of the first support, such that the joint between the battery cells can be better fixed to prevent shaking of the joint, thereby reducing the risk of tearing at the joint and improving the electrical connection stability of the battery.

In a possible implementation, the first accommodating space penetrates through the first support in the first direction; and the first support includes: a support body; and a first fixing member stacked with the support body in the second direction, the second direction being a thickness direction of the battery; where the first fixing member is fixedly connected to the support body, and the first accommodating space is formed between the support body and the first fixing member.

In this embodiment, by the support body and the first fixing member stacked in the second direction, the first accommodating space restricting the movement of the first electrode output portion and the second electrode output portion in the second direction can be formed, thereby reducing the risk of tearing at a joint between the first electrode output portion and the second electrode output portion.

In a possible implementation, the first support is provided with an adhesive filling channel configured to introduce a structural adhesive between the first electrode output portion and the first support and between the second electrode output portion and the first support.

In this embodiment, the first support is provided with the adhesive filling channel configured to introduce the structural adhesive between the first electrode output portion and the first support and between the second electrode output portion and the first support after the first electrode output portion is connected to the second electrode output portion, such that the first electrode output portion and the second electrode output portion can be fixedly connected to the first support, thereby enhancing the stiffness between the battery module and the first support.

In a possible implementation, the support assembly further includes a second support arranged at the first end portion of the battery module in the first direction and provided with a second accommodating space penetrating through the second support in the first direction and configured to accommodate the output portion of the battery module, the output portion being electrically connected to the electrode terminal, the first direction being a length direction of the battery.

In a possible implementation, the battery module further includes a third battery cell and a fourth battery cell stacked along the second direction and located at the second end portion of the battery module in the first direction, where a third electrode output portion of the third battery cell is electrically connected to a fourth electrode output portion of the fourth battery cell, the first direction is a length direction of the battery, and the second direction is a thickness direction of the battery; and the support assembly further includes a third support arranged in a third accommodating space formed by the third electrode output portion and the fourth electrode output portion in a surrounding manner and configured to support the third electrode output portion and the fourth electrode output portion.

In this embodiment, the third battery cell and the fourth battery cell are stacked along the second direction, such that the third electrode output portion of the third battery cell and the fourth electrode output portion of the fourth battery cell will form the third accommodating space in a surrounding manner after being connected; and the third support is arranged in the third accommodating space to support the third electrode output portion and the fourth electrode output portion, thereby reducing the risk of tearing between the third electrode output portion and the fourth electrode output portion, and improving the electrical connection stability of the battery.

In a possible implementation, the battery cells are bag-shaped battery cells, and the shell of each of the battery cells includes a metalized plastic film.

In this embodiment, the battery cells are set to be the bag-shaped battery cells, which can reduce the weight of the battery, thereby increasing the energy density. In addition, the shell of the battery cell includes the metalized plastic film, which can enhance the stiffness of the battery cells.

In a second aspect, a power consuming device is provided, including the battery in the first aspect and any one possible implementation in the first aspect, where the battery is configured to provide electric energy for the power consuming device.

### BRIEF DESCRIPTION OF THE DRAWINGS

To more clearly illustrate the technical solutions in the embodiments of the present application, the accompanying drawings that need to be used in the embodiments of the present application will be briefly introduced below. Apparently, the accompanying drawings described below merely illustrate some embodiments of the present application. Those of ordinary skill in the art may also derive other accompanying drawings from the accompanying drawings without creative efforts.
FIG. 1 is a schematic structural diagram of a vehicle disclosed by an embodiment of the present application;
FIG. 2 shows a schematic exploded view of a battery according to an embodiment of the present application;
FIG. 3 shows another schematic exploded view of a battery according to an embodiment of the present application;
FIG. 4 is a schematic exploded view of a first end cover assembly in FIG. 3;
FIG. 5 is a schematic structural diagram of a connector in FIG. 3;
FIG. 6 is a front view of a second end cover assembly in FIG. 3;
FIG. 7 is a partial front view of a battery shown in FIG. 3;
FIG. 8 is a partial top view of a battery shown in FIG. 3;
FIG. 9 shows a schematic assembly diagram of a case and a support assembly provided by an embodiment of the present application;
FIG. 10 shows a yet another schematic exploded view of a battery according to an embodiment of the present application;
FIG. 11 shows a yet another schematic exploded view of a battery according to an embodiment of the present application;
FIG. 12 shows a schematic structural diagram of a battery according to an embodiment of the present application;
FIG. 13 shows a schematic structural diagram of a first support in an embodiment of the present application; and
FIG. 14 shows a partial front view of a battery according to an embodiment of the present application.

In the accompanying drawings, the accompanying drawings are not drawn in actual scale.

### DETAILED DESCRIPTION OF THE EMBODIMENTS

The implementations of the present application are further described in detail below with reference to the accompanying drawings and the embodiments. The detailed description of the following embodiments and the accompanying drawings serve to illustratively describe the principles of the present application, but are not intended to limit the scope of the present application, i.e., the present application is not limited to the described embodiments.

In the description of the present application, it should be noted that, unless otherwise noted, "multiple" means two or more; and orientation or positional relationships indicated by the terms "up", "down", "left", "right", "inner", "outer", and the like are only for the convenience of describing the present application and simplifying the description rather than indicating or implying that the referenced device or element must have a particular orientation or be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within an allowable error range. "Parallel" is not strictly parallel, but within an allowable error range.

Orientation words occurring in the following description are all directions shown in the drawings and do not limit the specific structure of the present application. In the description of the present application, it should also be noted that, unless otherwise expressly specified and limited, the terms "mount", "joint", and "connect" should be understood in a broad sense, for example, it may be fixed connection, detachable connection, or being integrally connected; moreover, it may be being directly connected or indirectly connected by an intermediate medium. The specific meanings of the above terms in the present application may be understood by those of ordinary skill in the art depending on specific circumstances.

The mention of "embodiment" in the present application means that specific features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described in the present application may be combined with other embodiments.

The term "and/or" in the present application is simply a description of the association relationship of the associated objects, indicating that three relationships can exist, for example, A and/or B, which can mean: A exists alone, both A and B exist, and B exists alone. In addition, the character "/" in the present application generally indicates an alternative relationship between the front and back associated objects.

As used in the present application, "multiple" refers to more than two (includes two), similarly, "multiple sets" refers to more than two sets (includes two sets), and "multichip" refers to more than two chips (includes two chips).

In the present application, the battery cell may include a lithium-ion secondary battery, a lithium-ion primary battery, a lithium-sulfur battery, a sodium and lithium-ion battery, a sodium-ion battery, or a magnesium-ion battery, which is not limited in the embodiment of the present application. A shape of the battery cell may be a cylinder, a flat body, a cuboid, or another shape, which also is not limited in the embodiment of the present application. The battery cell generally includes a cylindrical battery cell, a prismatic battery cell, and a pouch battery cell according to encapsulation modes, which also are not limited in the embodiment of the present application.

The battery cell includes an electrode assembly and an electrolyte, where the electrode assembly includes a positive plate, a negative plate, and a separator. The battery cell mainly operates relying on metal ions moving between the positive plate and the negative plate. The positive plate includes a positive current collector and a positive active material layer, where the positive active material layer coats a surface of the positive current collector, and the current collector not coated with the positive active material layer protrudes from the current collector coated with the positive active material layer and serves as a positive tab. By using the lithium-ion battery as an example, a material of the positive current collector may be aluminum, and the positive active material may be lithium cobaltate, lithium iron phosphate, ternary lithium, or lithium manganate. The negative plate includes a negative current collector and a negative active material layer, where the negative active material layer coats a surface of the negative current collector, and the current collector not coated with the negative active material layer protrudes from the current collector coated with the negative active material layer and serves as a negative tab. A material of the negative current collector may be copper, and the negative active material may be carbon or silicon. To ensure that there is no fusing when a high current passes, there are multiple positive tabs stacked together and multiple negative tabs stacked together. A material of the separator may be polypropylene (PP) or polyethylene (PE). In addition, the electrode assembly may be in a wound structure or a laminated structure, and the embodiment of the present application is not limited to this.

The key to the sustainable development of new energy industry is energy conservation and emission reduction. In this case, power consuming devices have become an important part in the sustainable development of new energy industry due to their advantages in energy conservation and environmental protection. For the power consuming devices, the battery technology is an important factor related to their development.

In the development of battery technologies, in addition to improving the safety of batteries, other design factors need to be considered. The energy density is a factor that cannot be ignored. Therefore, how to increase the energy density of batteries is an urgent technical problem to be solved in battery technologies.

In view of this, an embodiment of the present application provides a battery. A battery module with a shell made of an insulating material is assembled into an insulating case, which can reduce the weight of the battery, thereby increasing the energy density of the battery.

The technical solutions described in the embodiments of the present application are all applicable to various devices using batteries, such as mobile phones, portable devices, laptops, battery cars, electric toys, electric tools, electric vehicles, ships, and spacecrafts. For example, the spacecrafts include airplanes, rockets, space shuttles, and spaceships.

It should be understood that the technical solutions described in the embodiments of the present application are applicable to not only the power consuming devices described above, but all devices using batteries. However, for the sake of simplicity, the following embodiments are all described using an electric vehicle as an example.

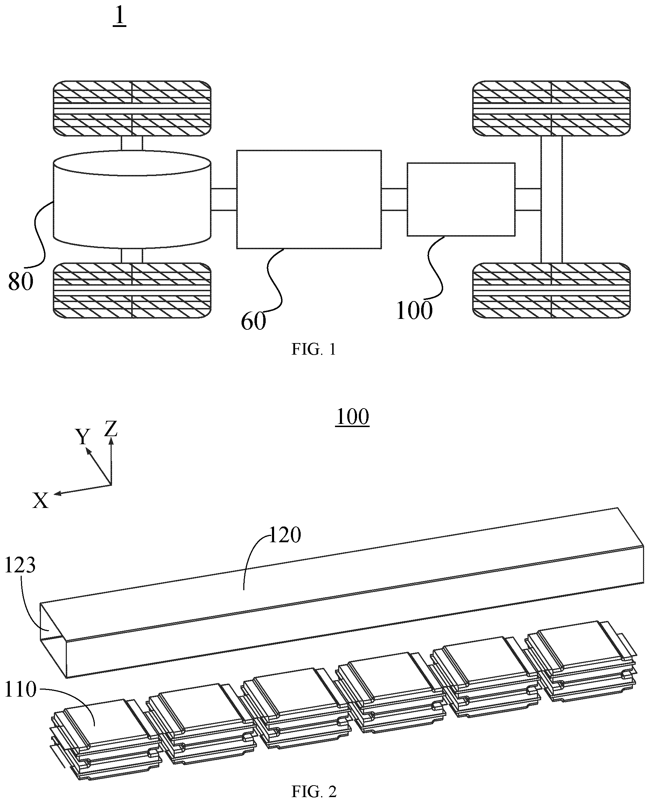

For example, as shown in FIG. 1 which is a schematic structural diagram of a vehicle 1 according to an embodiment of the present application, the vehicle 1 may be a fuel vehicle, a gas vehicle, or a new energy vehicle, where the new energy vehicle may be a battery electric vehicle, a hybrid electric vehicle, or an extended-range vehicle. A motor 80, a controller 60, and a battery 100 can be arranged inside the vehicle 1, where the controller 60 is configured to control the battery 100 to supply power to the motor 80. For example, the battery 100 can be arranged at a bottom, a front, or a rear of the vehicle 1. The battery 100 may be configured to supply power to the vehicle 1, for example, the battery 100 may serve as a power supply for operating the vehicle 1; and the battery may be configured for a circuit system of the vehicle 1, for example, the battery may be configured to meet power consuming requirements of the vehicle 1 during starting, navigation and operation. In another embodiment of the present application, the battery 100 may not only be used as a power supply for operating the vehicle 1, but also be used as a power supply for driving the vehicle 1, replacing or partially replacing fuel or natural gas, to provide driving power for the vehicle 1.

FIG. 2 shows a schematic exploded view of a battery 100 according to an embodiment of the present application. As shown in FIG. 2, the battery 100 includes: a battery module 110, including multiple battery cells electrically connected, where a shell of each of the multiple battery cells is made of an insulating material; and a case 120, provided with a cavity 123 configured to accommodate the battery module 110 and made of an insulating material.

It should be explained that the shell of the battery cell being made of the insulating material refers to that at least an outer surface of the battery cell is made of the insulating material, while the case 120 being made of the insulating material refers to that at least an inner surface of the case 120 is made of the insulating material. Optionally, the case 120 may be made of a plastic material.

Optionally, the multiple battery cells may be connected in series, that is, a positive electrode output portion of one battery cell is connected to a negative electrode output portion of another battery cell. Optionally, the multiple battery cells may be connected in parallel, that is, positive electrode output portions of the multiple battery cells are connected together, and negative electrode output portions of the multiple battery cells are connected together. Optionally, the multiple battery cells may be connected in series and parallel, that is, one part of the battery cells are first connected in parallel and then connected in series with another part of the battery cells connected in parallel, or one part of the battery cells are first connected in series and then connected in parallel with another part of the battery cells connected in series.

In an embodiment, the battery cells may be connected to each other through welding, such as ultrasonic welding or laser welding. In other embodiments, the battery cells may be connected to each other by other means such as a conductive adhesive. Optionally, the battery cells may be directly connected to each other or connected by a connecting piece. The embodiment of the present application does not have any limitation on the means of connection between the battery cells.

In this embodiment, both the shell of the battery cell and the case of the battery are set to be made of the insulating material, which can avoid a short circuit caused by contact between the battery cell and the case; moreover, an insulating structure between the battery cell and the case can be eliminated, which can reduce the weight of the battery, thereby increasing the energy density of the battery.

The electrode output portion in the present application may refer to a portion of a tab that penetrates through an outer package of the battery cell described above, or it may be understood as an electrical connection sheet electrically connected to the tab outside the outer package of the battery cell, which is not limited in the embodiment of the present application.

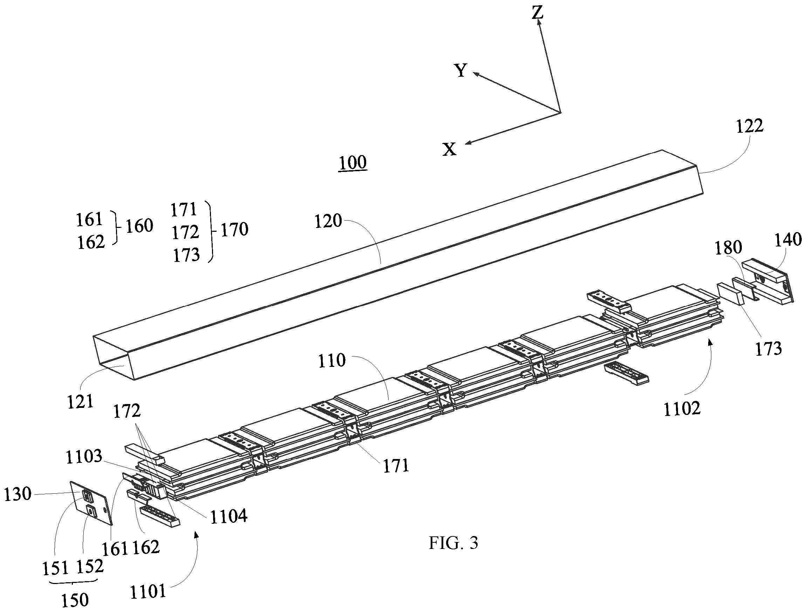

FIG. 3 shows another schematic exploded view of a battery 100 according to an embodiment of the present application. As shown in FIG. 3, the case 120 is provided with a first opening 121; the battery 100 further includes a first end cover assembly 130 arranged at a first end portion 1101 of the battery module 110 in a first direction X, the first end cover assembly 130 covering the first opening 121 and being provided with an electrode terminal 150 electrically connected to an output portion of the battery module 110.

For the convenience of description, all directions are first defined herein. The first direction X is a length direction of the battery 100, a second direction Z is a thickness direction of the battery 100, and a third direction Y is a width direction of the battery 100.

The output portion of the battery module 110 refers to an electrode output portion not connected to another electrode output portion in the battery module 110, and it usually refers to an electrode output portion of the battery cell that is not connected to an electrode output portion of another battery cell, where the battery cell is located at an end portion of the battery module 110 along the first direction X. Optionally, the output portion of the battery module 110 may include a positive electrode output portion and a negative electrode output portion. The positive electrode output portion and the negative electrode output portion may be located at a same end portion or different end portions of the battery module 110 in the first direction X. By using FIG. 3 as an example, the output portion of the battery module 110 includes a positive electrode output portion 1103 and a negative electrode output portion 1104, where the positive electrode output portion 1103 and the negative electrode output portion 1104 are located at a same end portion, i.e., a first end portion 1101 of the battery module 110 in the first direction X; and the electrode terminal 150 also located at the first end portion 1101 includes a positive electrode terminal 151 and a negative electrode terminal 152, where the positive electrode output portion 1103 is electrically connected to the positive electrode terminal 151, and the negative electrode output portion 1104 is electrically connected to the negative electrode terminal 152.

In this embodiment, the first end cover assembly 130 is arranged at the first end portion 1101 of the battery module 110 in the first direction X, to encapsulate the battery module 110 in the cavity 123 of the case 120, thereby reducing the risk of damage to the battery cells when the battery is subjected to vibration and shock.

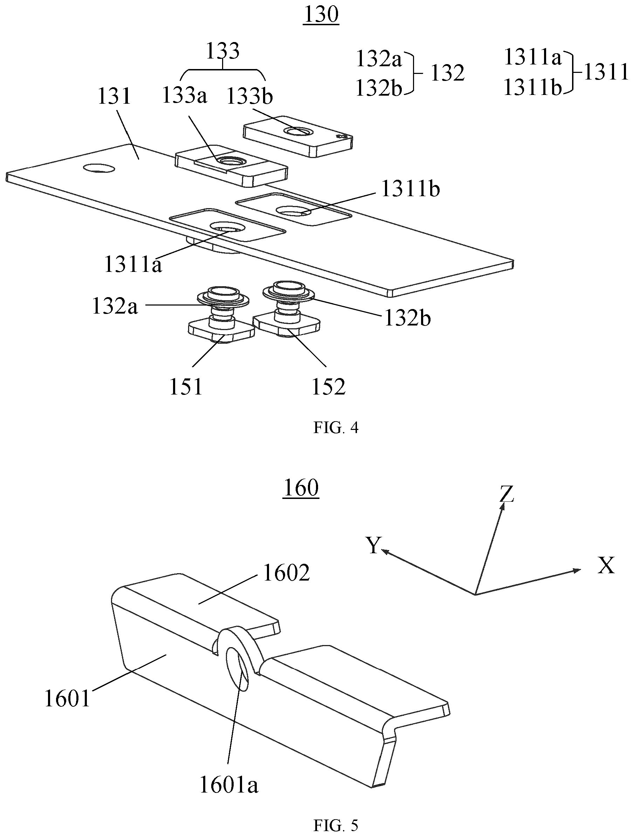

FIG. 4 is a schematic exploded view of a first end cover assembly 130 in FIG. 3. As shown in FIG. 4, the first end cover assembly 130 includes a first insulating end cover 131 provided with a first open hole 1311 configured to accommodate the electrode terminal 150; and the electrode terminal 150 is electrically connected to the output portion of the battery module 110 through the first open hole 1311. For example, a first open hole 1311a and a first open hole 1311b are formed in the first insulating end cover 131, where the first open hole 1311a is configured to accommodate the positive electrode terminal 151, and the first open hole 1311b is configured to accommodate the negative electrode terminal 152.

In this embodiment, the end cover in the first end cover assembly 130 is set to be made of an insulating material, which contributes to eliminating an insulating structure between the electrode terminal 150 and the end cover and an insulating structure between the end cover and the battery module, thereby further increasing the energy density of the battery 100.

As shown in FIG. 4, the first end cover assembly 130 further includes a sealing ring 132 configured to seal a gap between the electrode terminal 150 and the first open hole 1311. For example, the first end cover assembly 130 includes a first sealing ring 132a and a second sealing ring 132b, where the first sealing ring 132a is configured to seal a gap between the positive electrode terminal 151 and the first open hole 1311a, and the second sealing ring 132b is configured to seal a gap between the negative electrode terminal 152 and the first open hole 1311b.

In this embodiment, the arrangement of the sealing ring 132 improves the sealing property of the battery 100, thereby improving the safety of the battery 100.

Optionally, as shown in FIG. 4, the first end cover assembly 130 further includes a conductive block 133 arranged on one side, away from the battery module 110, of the first insulating end cover 131 around the first open hole 1311; and the electrode terminal 150 is fixedly connected to the first insulating end cover 131 by the conductive block 133. For example, the first end cover assembly 130 includes a first conductive block 133a and a second conductive block 133b, where the positive electrode terminal 151 is fixedly connected to the first insulating end cover 131 by the first conductive block 133a, and the negative electrode terminal 152 is fixedly connected to the first insulating end cover 131 by the second conductive block 133b.

In this embodiment, the arrangement of the conductive block 133 makes it possible to fixedly connect the electrode terminal 150 to the first insulating end cover 131, and to increase the area of the electrode terminal 150, thereby enhancing the current carrying capacity.

Optionally, as shown in FIG. 3, the battery 100 further includes a connector 160 electrically connecting the output portion of the battery module 110 to the electrode terminal 150. For example, the battery 100 includes a first connector 161 and a second connector 162, where the positive electrode output portion 1103 is electrically connected to the positive electrode terminal 151 by the first connector 161, and the negative electrode output portion 1104 is electrically connected to the negative electrode terminal 152 by the second connector 162.

In this embodiment, the arrangement of the connector 160 can implement electrical connection between the output portion of the battery module 110 and the electrode terminal 150.

FIG. 5 is a schematic structural diagram of a connector 160 in FIG. 3. As shown in FIG. 5, the connector 160 includes a first portion 1601 and a second portion 1602, the first portion 1601 being arranged opposite to the first insulating end cover 131, the second portion 1602 extending towards the battery module 110 from one end of the first portion 1601 in a second direction Z; the electrode terminal 150 is connected to the first portion 1601; and the second portion 1602 is connected to the output portion of the battery module 110.

Further, as shown in FIG. 5, the first portion 1601 is provided with a second open hole 1601a in which the electrode terminal 150 is connected to the first portion 1601. Optionally, as shown in FIG. 5, the connector 160 may include two second portions 1602 between which the second opening 1601 is formed. It should be understood that FIG. 5 only illustrates a structure of a connector 160 that may be flexibly designed as needed, and the embodiment of the present application should not be limited to this.

Optionally, as shown in FIG. 3, the case 120 is provided with a second opening 122; and the battery 100 further includes a second end cover assembly 140 arranged at a second end portion 1102 of the battery module 110 in the first direction X and covering the second opening 122, the second end cover assembly 140 being made of an insulating material.

In other words, the second end cover assembly 140 and the first end cover assembly 130 are oppositely arranged along the first direction X, and cover two opposite openings of the case 120 in the first direction X, respectively, such that the battery module 110 is encapsulated in the cavity 123 of the case 120.

Optionally, the positive electrode output portion 1103 and the negative electrode output portion 1104 of the battery module 110 are arranged at the same end portion of the battery module 110 in the first direction X, while the electrode output portions of the battery cell located at the other end portion of the battery module 110 are connected, such that the first end cover assembly 130 and the second end cover assembly 140 are asymmetric, i.e., the first end cover assembly 130 is provided with the electrode terminal 150, while the second end cover assembly 140 is not provided with the electrode terminal.

In this embodiment, the second end cover assembly 140 is set to be made of the insulating material, which contributes to eliminating an insulating structure between an end cover and the battery module 110, thereby further increasing the energy density of the battery 100.

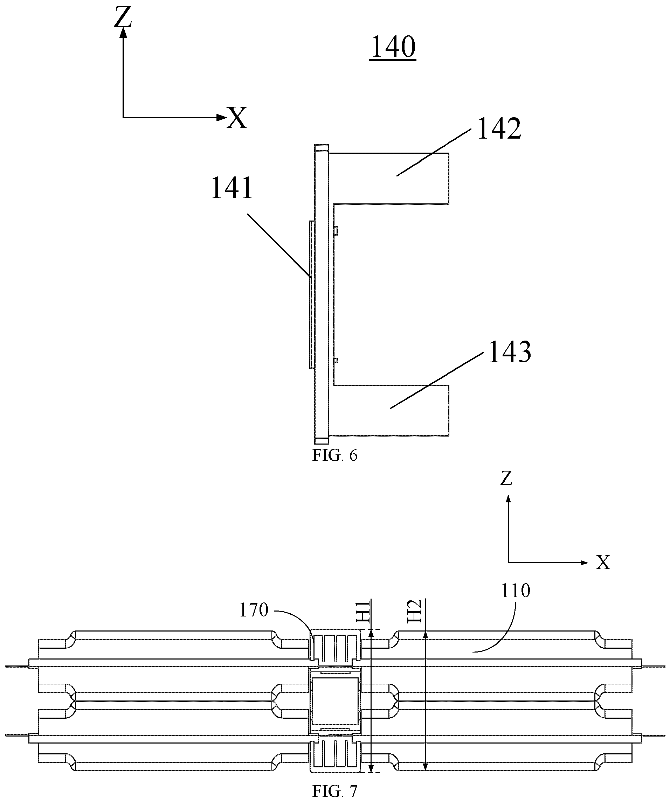

FIG. 6 is a front view of a second end cover assembly 140 in FIG. 3. As shown in FIG. 6, the second end cover assembly 140 includes a second insulating end cover 141 and two protrusions, for example, the two protrusions include a first protrusion 142 and a second protrusion 143. The second insulating end cover 141 is arranged opposite to the first insulating end cover 131, and the two protrusions are oppositely arranged along the second direction Z and connected to the second insulating end cover 141. As shown in FIG. 6, projections of the two protrusions on a plane where the second insulating end cover 141 is located are located in the second insulating end cover 141, such that the two protrusions are capable of being embedded into the second opening 122.

Optionally, in this embodiment of the present application, the second insulating end cover 141 and the two protrusions are integrally formed.

In this embodiment, the second insulating end cover 141 and the two protrusions are integrally formed, which can reduce manufacturing procedures of the battery 100.

Optionally, in this embodiment of the present application, the second insulating end cover 141 and the two protrusions are made of a same material. For example, the second insulating end cover 141 and the two protrusions are made of a plastic material.

Optionally, as shown in FIG. 3, the battery 100 further includes a support assembly 170 configured to support electrode output portions of the multiple battery cells.

In this embodiment, the support assembly 170 is arranged to support the electrode output portions of the battery cells, which can reduce the risk of tearing at a joint between the battery cells.

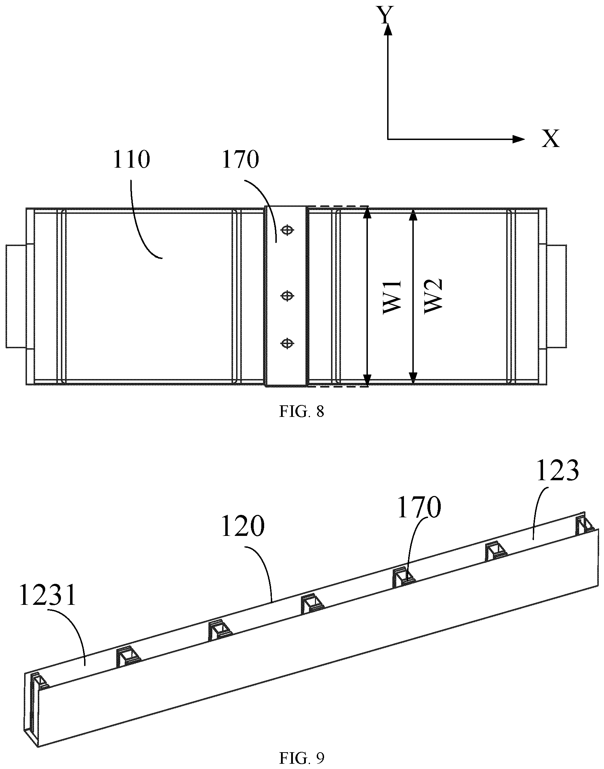

FIG. 7 is a partial front view of a battery 100 shown in FIG. 3. FIG. 8 is a partial top view of a battery 100 shown in FIG. 3. Optionally, as shown in FIG. 7, in the second direction Z, a size of the support assembly 170 is H1, and a size of the battery module 110 is H2, where H1 is greater than H2. It should be understood that H2 may be the maximum size of the battery module 110 in the third direction Z. Optionally, as shown in FIG. 8, in a third direction Y, a size of the support assembly 170 is W1, and a size of the battery module 110 is W2, where W1 is greater than W2.

In this embodiment, in the second direction Z and the third direction Y, the sizes H1 and W1 of the support assembly 170 are set to be greater than the sizes H2 and W2 of the battery module 110, respectively, such that when the battery 100 is subjected to vibration and shock, the support assembly 170 can be first in contact with the case 120 to play a buffering role, thereby reducing the damage to the battery cells.

FIG. 9 shows a schematic assembly diagram of a case 120 and a support assembly 170 provided by an embodiment of the present application. As shown in FIG. 9, in the first direction X, the support assembly 170 divides the cavity 123 of the case 120 into multiple sub-cavities 1231, where each of the multiple sub-cavities 1231 is configured to accommodate a column of battery cells stacked along the second direction Z in the multiple battery cells. For example, the multiple battery cells are arranged in at least one row along the first direction X, one support is arranged between adjacent two columns of the battery cells, and one support is arranged at each of two ends of each of the multiple battery cells in the first direction X, such that multiple supports separate different columns of the battery cells in different sub-cavities 1231 of the case 120.

Optionally, in this embodiment of the present application, the support assembly 170 may be made of an insulating material. For example, the support assembly 170 is made of a plastic material.

In this embodiment, the support assembly 170 is set to be made of the insulating material, which can avoid a short circuit between the battery cells and the case 120 due to contact between the support assembly 170 and the case 120.

Optionally, in this embodiment of the present application, the support assembly 170 is fixedly connected to the case 120.

Optionally, in an embodiment, before the battery module 110 is assembled into the cavity 123 of the case 120, the support assembly 170 may be fixedly connected to the case 120. For example, the support assembly 170 may be integrally formed with the case 120. For another example, the support assembly 170 is first fixedly connected to the case 120 by a structural adhesive. In this case, the support assembly 170 divides the cavity 123 of the case 120 into multiple sub-cavities 1231, and the multiple battery cells of the battery module 110 can be assembled into the multiple sub-cavities 1231.

Optionally, in other embodiments, before the battery module 110 is assembled into the cavity 123 of the case 120, the support assembly 170 is first assembled and formed with the battery module 110, and then the support assembly and the battery module are together assembled into the cavity 123 of the case 120. The support assembly 170 may be fixedly connected to the case 120 by the structural adhesive. For example, the case 120 may be provided with an adhesive injection hole configured to introduce the structural adhesive between the support assembly 170 and the case 120.

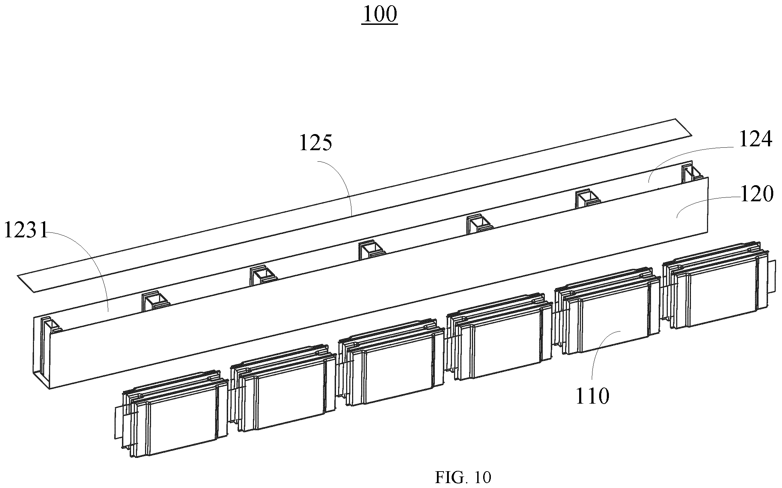

FIG. 10 shows another schematic exploded view of a battery 100 according to an embodiment of the present application. As shown in FIG. 10, before the battery module 110 is assembled into the cavity 123 of the case 120, the support assembly 170 is fixedly connected to the case 120, for example, the support assembly 170 and the case 120 are integrally formed. Optionally, as shown in FIG. 10, the case 120 is provided with a third opening 124 in the third direction Y, the third opening 124 being configured to guide the multiple battery cells to be assembled into the multiple sub-cavities 1231. The battery 100 further includes a cover body 125 covering the third opening 124 and made of an insulating material.

Optionally, the support assembly 170 and the case 120 are made of a same material, for example, both the support assembly 170 and the case are made of a plastic material.

In this embodiment, the support assembly 170 and the case 120 are integrally formed, which can reduce the manufacturing procedures of the battery 100; in addition, the case 120 is provided with the third opening 124 in the third direction Y, such that the battery module 110 can be assembled into the cavity 123 of the case 120 along the third opening 124; and the cover body 125 covers the third opening 124, such that the battery module 110 can be encapsulated in the cavity 123, thereby protecting the battery module 110.

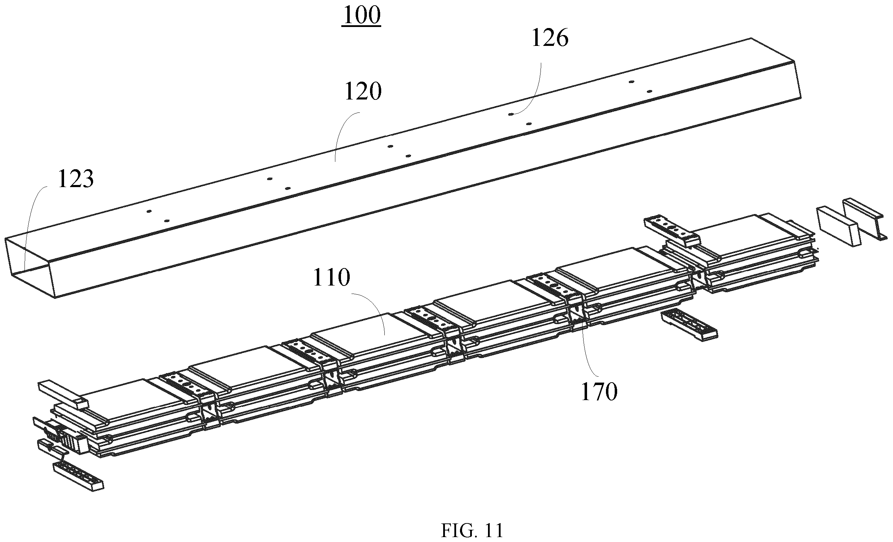

FIG. 11 shows yet another schematic exploded view of a battery 100 according to an embodiment of the present application. As shown in FIG. 11, before the battery module 110 is assembled into the cavity 123 of the case 120, the support assembly 170 is first assembled and formed with the battery module 110, and then the support assembly and the battery module are together assembled into the cavity 123 of the case 120. The case 120 is provided with an adhesive injection hole 126 at a corresponding position of the support assembly 170, the adhesive injection hole 126 being configured to introduce a structural adhesive between the case 120 and the support assembly 170, such that the case 120 is fixedly connected to the support assembly 170.

In this embodiment, the case 120 is provided with the adhesive injection hole 126 at the corresponding position of the support assembly 170, such that the support assembly 170 can be first assembled together with the battery module 110 and then assembled into the case together with the battery module 110, thereby improving the stability of connection between the battery module 110 and the support assembly 170.

In other embodiments, the embodiment provided in FIG. 10 may also be combined with the embodiment provided in FIG. 11. For example, the structure that the support assembly 170 and the case 120 shown in FIG. 10 are integrally formed may be adopted, and the case 120 may also be provided with the adhesive injection hole 126 as shown in FIG. 11 at the corresponding position of the support assembly 170. After the battery module 110 is assembled into the battery module 110, the structural adhesive is filled through the adhesive injection hole 126, thereby further enhancing the strength between the support assembly 170 and the case 120. For another example, the case 120 shown in FIG. 11 may also be provided with a third opening 124 in the third direction Y, and the battery module 110 can be assembled into the cavity 123 of the case 120 along the third opening 124.

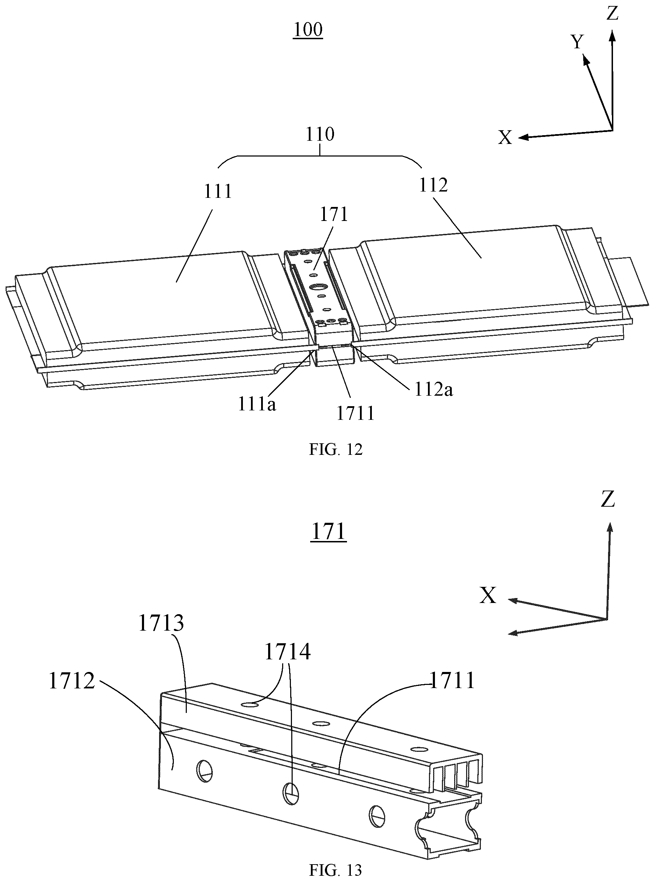

FIG. 12 shows a schematic structural diagram of a battery 100 according to an embodiment of the present application. As shown in FIG. 12, the battery module 110 includes a first battery cell 111 and a second battery cell 112 electrically connected along the first direction X, where a first electrode output portion 111a of the first battery cell 111 is electrically connected to a second electrode output portion 112a of the second battery cell 112; and the support assembly 170 includes a first support 171 arranged between the first battery cell 111 and the second battery cell 112, where the first support 171 is provided with a first accommodating space 1711 configured to accommodate the first electrode output portion 111a and the second electrode output portion 112a.

In this embodiment, the first support 171 is arranged between the first battery cell 111 and the second battery cell 112 that are electrically connected, and connecting portions of the first battery cell 111 and the second battery cell 112 are arranged in the first accommodating space 1711 of the first support 171, such that the joint between the battery cells can be better fixed to prevent shaking of the joint, thereby reducing the risk of tearing at the joint and improving the electrical connection stability of the battery 100.

Optionally, the first electrode output portion 111a and the second electrode output portion 112a may be connected by means of welding, such that the first accommodating space 1711 can penetrate through the first support in the first direction X. That is, the first electrode output portion 111a is first welded with the second electrode output portion 112a, and then the first electrode output portion 111a and the second electrode output portion 112a after being connected are assembled into the first accommodating space 1711.

FIG. 13 shows a schematic structural diagram of a first support 171 in an embodiment of the present application. As shown in FIG. 13, the first support 171 includes a support body 1712 and a first fixing member 1713 stacked in a second direction Z. The first fixing member 1713 is fixedly connected to the support body 1712, and the first accommodating space 1711 is formed between the support body 1712 and the first fixing member 1713.

Optionally, the support body 1712 may be in a plate-shaped structure, that is, the support body 1712 is a hexahedron. For example, the support body 1712 is a cuboid with six flat surfaces. For another example, the support body 1712 is a hexahedron with partial uneven surfaces.

The first fixing member 1713 is fixedly connected to the support body 1712, which may refer to that the first fixing member 1713 is fixedly connected to the support body 1712 before the first support 171 is assembled with the battery module 110; which may also refer to that the first fixing member 1713 is fixedly connected to the support body 1712 after the first support 171 is assembled with the battery module 110.

In this embodiment, by the support body 1712 and the first fixing member 1713 stacked in the second direction Z, the first accommodating space 1711 restricting the movement of the first electrode output portion 111a and the second electrode output portion 112a in the second direction Z can be formed, thereby reducing the risk of tearing at a joint between the first electrode output portion 111a and the second electrode output portion 112a.

As mentioned above, the multiple battery cells in the battery module 110 may be arranged in multiple rows along the first direction X, such that the adjacent battery cells in the same column but in different rows in the multiple battery cells can share one first bracket 171. For example, the multiple battery cells in the battery module 110 are arranged in two rows along the first direction X. The first support 171 may further include a second fixing member stacked with the support body 1712 in the second direction Z, where the support body 1712 is arranged between the first fixing member 1713 and the second fixing member. The second fixing member is fixedly connected to the support body 1712, and a second accommodating space is formed between the second fixing member and the support body 1712. The second accommodating space is configured to accommodate electrode output portions of electrically connected first and second battery cells stacked along the second direction Z.

Optionally, as shown in FIG. 13, the first support 171 is provided with an adhesive filling channel 1714 configured to introduce a structural adhesive between the first electrode output portion 111a and the first support 171 and between the second electrode output portion 112a and the first support.

In this embodiment, the first support 171 is provided with the adhesive filling channel 1714 configured to introduce the structural adhesive between the first electrode output portion 111a and the first support 171 and between the second electrode output portion 112a and the first support after the first electrode output portion is connected to the second electrode output portion, such that the first electrode output portion 111a and the second electrode output portion 112a can be fixedly connected to the first support 171, thereby enhancing the stiffness between the battery module 110 and the first support 171.

Optionally, the adhesive filling channel 1714 is arranged on the first fixing member 1713. Optionally, the adhesive filling channel 1714 may also be arranged on the support body 1712. For example, the support body 1712 has a cavity and includes two side walls distributed along a first direction X and two support walls distributed along a second direction Z. The adhesive filling channel 1714 is arranged on at least one side wall and at least one support wall of the support body and is configured to introduce the structural adhesive between at least one of the first battery cell 111 and the second battery cell 112 and the first support 171, to fixedly connect the at least one battery cell to the first support 171. Optionally, the adhesive filling channel 1714 is arranged on two side walls and two support walls.

Optionally, as shown in FIG. 3, the support assembly 170 further includes a second support 172 arranged at the first end portion 1101 of the battery module 110 in the first direction X and provided with a second accommodating space penetrating through the second support 172 in the first direction X and configured to accommodate the output portion of the battery module 110, where the output portion of the battery module 110 is electrically connected to the electrode terminal 150.

Optionally, as shown in FIG. 3, the output portion of the battery module 110 includes a positive electrode output portion 1103 and a negative electrode output portion 1104, where the positive electrode output portion 1103 and the negative electrode output portion 1104 are located at a same end portion, for example, a first end portion 1101 of the battery module 110 in the first direction X. The second support 172 is provided with two second accommodating spaces configured to accommodate the positive electrode output portion 1103 and the negative electrode output portion 1104, respectively.

It should be understood that for the structure of the second support 172, reference may be made to the description of the first support 171, and for simplicity, it will not be repeated herein.

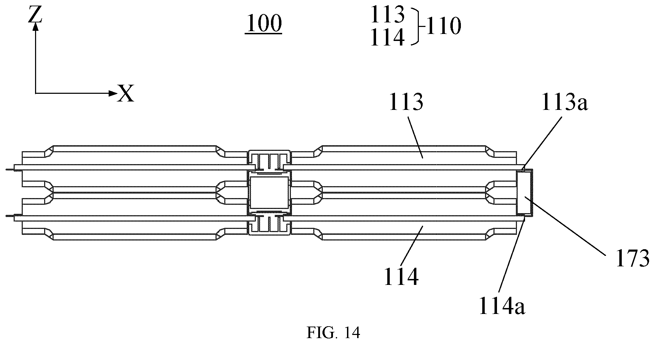

FIG. 14 shows a front view of a battery 100 according to an embodiment of the present application. As shown in FIG. 14, the battery module 110 includes a third battery cell 113 and a fourth battery cell 114 stacked along the second direction Z and located at the second end portion 1102 of the battery module 110 in the first direction X, where a third electrode output portion 113a of the third battery cell 113 is electrically connected to a fourth electrode output portion 114a of the fourth battery cell 114. The support assembly 170 further includes a third support 173 arranged in a third accommodating space formed by the third electrode output portion 113a and the fourth electrode output portion 114a in a surrounding manner and configured to support the third electrode output portion 113a and the fourth electrode output portion 114a.

In this embodiment, the third battery cell 113 and the fourth battery cell 114 are stacked along the second direction Z, such that the third electrode output portion 113a of the third battery cell 113 and the fourth electrode output portion 114a of the fourth battery cell 114 will form the third accommodating space in a surrounding manner after being connected; and the third support 173 is arranged in the third accommodating space to support the third electrode output portion 113a and the fourth electrode output portion 114a, thereby reducing the risk of tearing between the third electrode output portion 113a and the fourth electrode output portion 114a, and improving the electrical connection stability of the battery 100.

Optionally, in an embodiment, the third support 173 may be integrally formed with the second end cover assembly 140. Optionally, the third support 173 and the second end cover assembly 140 are made of a same material.

Optionally, in other embodiments, the third support 173 and the second end cover assembly 140 are independent components. In other words, the third support 173 penetrates through the second end cover assembly 140 in a third direction Y. In this case, the third support 173 and the second end cover assembly 140 may be made of the same material or different materials.

Optionally, the third electrode output portion 113a and the fourth electrode output portion 114a may be directly connected or connected by the connecting piece 180 as shown in FIG. 3.

Optionally, the battery cells in this embodiment of the present application are bag-shaped battery cells. In other words, the battery cells in this embodiment of the present application are pouch battery cells. Usually, electrode assemblies of the pouch battery cells are received in a packaging bag, edges of the packaging bag can be hermetically connected through hot pressing to form a sealing portion, and the electrode output portions extend to the outside of the packaging bag, to implement charging and discharging of the battery cells. Optionally, the shell of the battery cell may include a metalized plastic film.

In this embodiment, the battery cells are set to be the bag-shaped battery cells, which can reduce the weight of the battery, thereby increasing the energy density. In addition, the shell of the battery cell includes the metalized plastic film, which can enhance the stiffness of the battery cells.

An embodiment of the present application further provides a power consuming device. The power consuming device may include the battery 100 in the various foregoing embodiments, to provide electric energy for the power consuming device. Optionally, the power consuming device may be a vehicle, a ship, or a spacecraft.

The battery 100 according to the foregoing embodiments is arranged in the power consuming device, and both the shell of the battery cell and the case of the battery are set to be made of an insulating material, which can avoid a short circuit caused by contact between the battery cell and the case; moreover, an insulating structure between the battery cell and the case can be eliminated, which can reduce the weight of the battery, thereby increasing the energy density of the battery.

While the present application has been described with reference to preferred embodiments, various modifications may be made thereto and components therein may be replaced with equivalents without departing from the scope of the present application. In particular, the various technical features mentioned in the various embodiments may be combined in any manner as long as there is no structural conflict. The present application is not limited to the specific embodiments disclosed herein, but includes all technical solutions falling within the scope of the claims.

## Claims

1. A battery (100), comprising:
a battery module (110), comprising multiple battery cells electrically connected, wherein a shell of each of the multiple battery cells is made of an insulating material; and
a case (120), provided with a cavity (123) configured to accommodate the battery module (110) and the case is made of an insulating material.

2. The battery (100) according to claim 1, wherein the case (120) is provided with a first opening (121); the battery (100) further comprises
a first end cover assembly (130) arranged at a first end portion (1101) of the battery module (110) in a first direction (X), the first end cover assembly (130) covering the first opening (121), the first direction (X) being a length direction of the battery (100); and
an electrode terminal (150) is arranged on the first end cover assembly (130) and electrically connected to an output portion of the battery module (110).

3. The battery (100) according to claim 2, wherein the first end cover assembly (130) comprises
a first insulating end cover (131) provided with a first open hole (1311) configured to accommodate the electrode terminal (150); and
the electrode terminal (150) is electrically connected to the output portion through the first open hole (1311).

4. The battery (100) according to claim 3, wherein the first end cover assembly (130) further comprises
a sealing ring (132) configured to seal a gap between the electrode terminal (150) and the first open hole (1311).

5. The battery (100) according to claim 3 or 4, further comprising
a connector (160) electrically connecting the output portion to the electrode terminal (150).

6. The battery (100) according to claim 5, wherein the connector (160) comprises a first portion (1601) and a second portion (1602), the first portion (1601) being arranged opposite to the first insulating end cover (131), the second portion (1602) extending towards the battery module (110) from one end of the first portion (1601) in a second direction (Z); the electrode terminal (150) is connected to the first portion (1601); the second portion (1602) is connected to the output portion; and the second direction (Z) is a thickness direction of the battery (100).

7. The battery (100) according to claim 6, wherein the first portion (1601) is provided with a second open hole in which the electrode terminal (150) is connected to the first portion (1601).

8. The battery (100) according to any one of claims 3 to 7, wherein the case (120) is provided with a second opening (122); and the battery (100) further comprises
a second end cover assembly (140) arranged at a second end portion (1102) of the battery module (110) in the first direction (X) and covering the second opening (122), the second end cover assembly (140) being made of an insulating material.

9. The battery (100) according to claim 8, wherein the second end cover assembly (140) comprises a second insulating end cover (141) and two protrusions, the second insulating end cover (141) being arranged opposite to the first insulating end cover (131), the two protrusions being oppositely arranged along the second direction (Z) and connected to the second insulating end cover (141);
wherein projections of the two protrusions on a plane where the second insulating end cover (141) is located are located in the second insulating end cover (141), such that the two protrusions are capable of being embedded into the second opening (122); and the second direction (Z) is a thickness direction of the battery (100).

10. The battery (100) according to claim 9, wherein the second insulating end cover (141) and the two protrusions are integrally formed.

11. The battery (100) according to claim 10, wherein the second insulating end cover (141) and the two protrusions are made of a same material.

12. The battery (100) according to any one of claims 1 to 11, further comprising
a support assembly (170) configured to support electrode output portions of the multiple battery cells.

13. The battery (100) according to claim 12, wherein in the second direction (Z) and a third direction (Y), sizes of the support assembly (170) are greater than sizes of the battery module (110), the second direction (Z) being a thickness direction of the battery (100), the third direction (Y) being a width direction of the battery (100).

14. The battery (100) according to claim 12 or 13, wherein in the first direction (X), the support assembly (170) divides the cavity (123) into multiple sub-cavities (1231), each of the multiple sub-cavities (1231) being configured to accommodate a column of battery cells stacked along the second direction (Z) in the multiple battery cells, the first direction (X) being a length direction of the battery (100), the second direction (Z) being a thickness direction of the battery (100).

15. The battery (100) according to any one of claims 12 to 14, wherein the support assembly (170) is made of an insulating material.

16. The battery (100) according to any one of claims 12 to 15, wherein the support assembly (170) is fixedly connected to the case (120).

17. The battery (100) according to claim 16, wherein the support assembly (170) is integrally formed with the case (120).

18. The battery (100) according to claim 16 or 17, wherein the case (120) is provided with an adhesive injection hole (126) at a corresponding position of the support assembly (170), the adhesive injection hole (126) being configured to introduce a structural adhesive between the case (120) and the support assembly (170), such that the case (120) is fixedly connected to the support assembly (170).

19. The battery (100) according to any one of claims 16 to 18, wherein the case (120) is provided with a third opening (124) in the third direction (Y), the third opening (124) being configured to guide the multiple battery cells to be assembled into the cavity (123); and
the battery (100) further comprises a cover body (125) covering the third opening (124) and made of an insulating material.

20. The battery (100) according to any one of claims 12 to 19, wherein the support assembly (170) comprises
a first support (171) arranged between a first battery cell (111) and a second battery cell (112) electrically connected along the first direction (X) in the multiple battery cells, the first support (171) being provided with a first accommodating space (1711) configured to accommodate a first electrode output portion (111a) of the first battery cell (111) and a second electrode output portion (112a) of the second battery cell (112), the first electrode output portion (111a) and the second electrode output portion (112a) being electrically connected, the first direction (X) being a length direction of the battery (100).

21. The battery (100) according to claim 20, wherein the first accommodating space (1711) penetrates through the first support (171) in the first direction (X); and the first support (171) comprises:
a support body (1712); and
a first fixing member (1713) stacked with the support body (1712) in the second direction (Z), the second direction (Z) being a thickness direction of the battery (100);
wherein the first fixing member (1713) is fixedly connected to the support body (1712), and the first accommodating space (1711) is formed between the support body (1712) and the first fixing member (1713).

22. The battery (100) according to claim 20 or 21, wherein the first support (171) is provided with an adhesive filling channel (1714) configured to introduce a structural adhesive between the first electrode output portion (111a) and the first support (171) and between the second electrode output portion (112a) and the first support.

23. The battery (100) according to any one of claims 12 to 22, wherein the support assembly (170) further comprises
a second support (172) arranged at the first end portion (1101) of the battery module (110) in the first direction (X) and provided with a second accommodating space penetrating through the second support (172) in the first direction (X) and configured to accommodate the output portion of the battery module (110), the output portion being electrically connected to the electrode terminal (150), the first direction (X) being a length direction of the battery (100).

24. The battery (100) according to any one of claims 12 to 23, wherein the battery module (110) further comprises
a third battery cell (113) and a fourth battery cell (114) stacked along the second direction (Z) and located at the second end portion (1102) of the battery module (110) in the first direction (X), wherein a third electrode output portion (113a) of the third battery cell (113) is electrically connected to a fourth electrode output portion (114a) of the fourth battery cell (114), the first direction (X) is a length direction of the battery (100), and the second direction (Z) is a thickness direction of the battery (100); and
the support assembly (170) further comprises
a third support (173) arranged in a third accommodating space formed by the third electrode output portion (113a) and the fourth electrode output portion (114a) in a surrounding manner and configured to support the third electrode output portion (113a) and the fourth electrode output portion (114a).

25. The battery (100) according to any one of claims 1 to 24, wherein the battery cells are bag-shaped battery cells, and the shell of each of the battery cells comprises a metalized plastic film.

26. A power consuming device, comprising the battery (100) according to any one of claims 1 to 25, wherein the battery (100) is configured to provide electric energy for the power consuming device.
